# EUROPÄISCHE PATENTSCHRIFT

(11) **EP 2 059 995 B1**
(45) Veröffentlichungstag und Bekanntmachung des Hinweises auf die Patenterteilung: **05.01.2011**
(21) Anmeldenummer: 07801999.9
(22) Anmeldetag: 30.08.2007
(51) Int. Cl.: H02K 7/116, B60N 2/02

(54) **SITZVERSTELLVORRICHTUNG FÜR EINEN FAHRZEUGSITZ**
SEAT ADJUSTMENT DEVICE FOR A VEHICLE SEAT
DISPOSITIF DE REGLAGE POUR SIEGE DE VEHICULE

(30) Priorität: 08.09.2006 DE 102006042273
(43) Veröffentlichungstag der Anmeldung: 20.05.2009
(73) Patentinhaber: Johnson Controls GmbH Automotive Experience, 51399 Burscheid (DE)
(72) Erfinder: BREITFELD, Uwe, 40223 Düsseldorf (DE); TRIEBENECK, Frank, 72622 Nürtingen (DE)
(74) Vertreter: Lasch, Hartmut
(86) Internationale Anmeldenummer: PCT/EP2007/007578
(87) Internationale Veröffentlichungsnummer: WO 2008/028591

(56) Entgegenhaltungen:
- EP-A- 0 681 359
- DE-A1- 3 519 058
- DE-A1- 10 309 083

## Beschreibung

Die Erfindung betrifft eine Sitzverstellvorrichtung für einen Fahrzeugsitz gemäß dem Oberbegriff des Anspruchs 1.

Fahrzeugsitze insbesondere in Kraftfahrzeugen lassen sich auf viele verschiedene Arten, beispielsweise hinsichtlich ihrer Höhe, ihrer Neigung etc., verstellen, um auf diese Weise eine Anpassung an die körperlichen Gegebenheiten des Benutzers zu erreichen. In den meisten Fällen findet eine elektrisch angetriebene Sitzverstellvorrichtung Verwendung, die einen elektrischen Antriebsmotor aufweist, dessen Ausgangswelle mit einem Antriebsteil eines selbsthemmenden Freilaufs gekoppelt ist. Als selbsthemmender Freilauf sind sowohl eine selbsthemmende Schnecke als auch ein mechanischer Klemmfreilauf bekannt.

Wenn von dem Antriebsmotor eine Antriebskraft auf das Antriebsteil des selbsthemmenden Freilaufs aufgebracht wird, wird die Antriebsbewegung auf ein Antriebseil des Freilaufs übertragen. Wenn hingegen eine Antriebskraft am Abtriebsteil des Freilaufs einwirkt, sperrt der selbsthemmende Freilauf und es kommt zu keiner Bewegung an dessen Antriebsteil.

Das Abtriebsteil des selbsthemmenden Freilaufs steht in Verbindung mit einem Getriebe, mit dem die Abtriebsbewegung in gewünschter Weise umgesetzt wird. Die Abtriebsseite des Getriebes ist mit dem zu verstellenden Bauteil des Fahrzeugsitzes verbunden.

Im Oberbegriff des Anspruchs 1 wird von einer Sitzverstellvorrichtung ausgegangen, wie sie in der DE 103 09 083 A1 beschrieben ist. Eine derartige Sitzverstellvorrichtung umfasst ein Gehäuse, in dem ein Elektromotor und eine aus einer Getriebeeinheit und einer Lastmomentensperre gebildeten Baueinheit integriert sind. Die genannten Baugruppen sind sehr verschachtelt angeordnet und mit dem napfförmig ausgebildeten Gehäuse abgedeckt. Dies führt zwar zu einem sehr kompakten, platzsparenden Aufbau, jedoch ist die Montage relativ aufwendig und insbesondere für eine automatisierte Montage beispielsweise mittels eines Montageroboters nicht geeignet.

Die DE 35 19 058 A1 zeigt eine Sitzverstellvorrichtung, bei der ein Getriebe und ein Freilauf aufeinandergesetzt und in einem gemeinsamen Gehäuse angeordnet sind. Der Antriebsmotor für die Sitzverstellung ist dabei außenseitig des Gehäuses angebracht, wobei die Antriebsbewegung des außenseitigen Antriebsmotors über eine Schnecke und ein Schneckenrad in das Gehäuse hineingeführt wird. Auf diese Weise ist verglichen mit der DE 103 09 083 A1 ein grundsätzlich anderes Anordnungsprinzip des Antriebsmotors, des Freilaufs und des Getriebes verwirklicht. Mit diesem Aufbau ist der Nachteil verbunden, dass die Sitzverstellvorrichtung einen relativ großen Bauraum benötigt und dass für die Anbringung des Elektromotors ein hoher Montageaufwand notwendig ist.

Der Erfindung liegt die Aufgabe zugrunde, eine Sitzverstellvorrichtung der genannten Art zu schaffen, die eine leicht zugängliche Anordnung des Antriebsmotors, des Getriebes und des Freilaufs besitzt und sich in einfacher Weise montieren lässt.

Diese Aufgabe wird erfindungsgemäß mit einer Sitzverstellvorrichtung mit den Merkmalen des Anspruchs 1 gelöst. Dabei ist vorgesehen, dass der Antriebsmotor, der selbsthemmende Freilauf und das Getriebe in einem gemeinsamen Gehäuse angeordnet sind. Auf diese Weise ist eine sehr kompakte, in sich abgeschlossene Baueinheit gegeben, die vollständig vorgefertigt werden kann, ohne dass es der nachträglichen Anbringung eines Elektromotors bedarf.

Das Gehäuse weist ein Gehäuse-Grundteil und zumindest eine Gehäuse-Abdeckung auf, wobei der Antriebsmotor, der Freilauf und das Getriebe an dem Gehäuse-Grundteil gehalten sind. Der Antriebsmotor und das Getriebe sind auf der Vorderseite des Gehäuse-Grundteils und der Freilauf auf der Rückseite des Gehäuse-Grundteils angeordnet. Das Gehäuse-Grundteil, das vorzugsweise als mit Ausnehmungen und Durchbrechungen versehender Gehäuseblock ausgebildet ist, wird vorzugsweise von zwei entgegengesetzten Seiten mit jeweils einer Gehäuse-Abdeckung versehen, wobei vorzugsweise an zumindest einer der Gehäuseabdeckungen entsprechende Bohrungen oder Vorrichtungen ausgebildet sind, um die Sitzverstellvorrichtung an ihrem Anbauort anbringen zu können.

Es ha sich als sinnvoll erwiesen, als Antriebsmotor einen bürstenlosen Elektromotor zu verwenden, der einen sehr kompakten, flachen Aufbau besitzt und vollständig in das Gehäuse-Grundteil eingebettet werden kann.

Der Antriebsmotor ist vorzugsweise in einem Endbereich des Gehäuses angeordnet und steht mit dem Freilauf in Eingriff, der im mittleren Bereich des Gehäuses angeordnet ist. Als Freilauf findet vorzugsweise ein mechanischer Klemmfreilauf Verwendung, dessen konstruktiver Aufbau an sich bekannt ist.

Das Getriebe ist auf der dem Antriebsmotor abgewandten Seite des Freilaufs im Gehäuse-Grundteil angeordnet. Das Getriebe ist vorzugsweise als Stirnradgetriebe oder als Umlaufrädergetriebe ausgebildet ist, wodurch ebenfalls ein sehr kompakter Aufbau erreicht werden kann. Durch die in Reihe liegende Anordnung des Antriebsmotors, des Freilaufs und des Getriebes ist eine sehr gute, kurze Kraftübertragung gewährleistet.

Für den Antriebsmotor kann eine elektronische Steuerung vorgesehen sein. In Weiterbildung der Erfindung ist vorgesehen, das diese elektronische Steuerung für den Antriebsmotor ebenfalls in das Gehäuse integriert ist.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine perspektivische Ansicht der Vorderseite der Sitzverstellvorrichtung,
- Fig. 2: eine perspektivische Ansicht der Rückseite der Sitzverstellvorrichtung,
- Fig. 3: eine perspektivische Ansicht der Rückseite der Sitzverstellvorrichtung mit abgenommener Gehäuse-Abdeckung und
- Fig. 4: eine perspektivische Ansicht der Vorderseite der Sitzverstellvorrichtung mit abgenommener Gehäuse-Abdeckung.

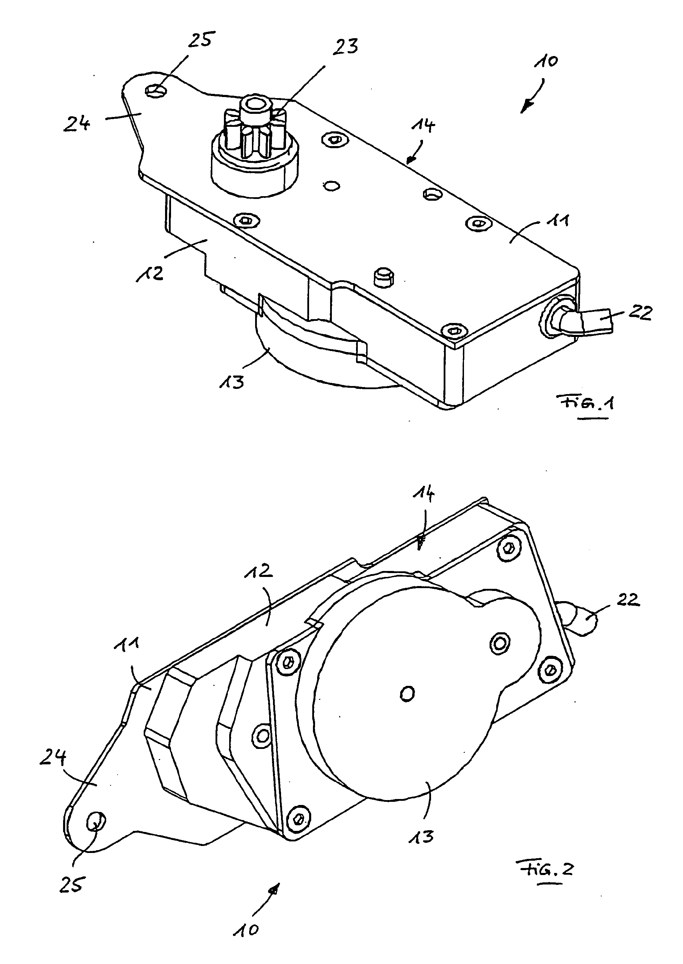

Eine in den Figuren 1 bis 4 dargestellte Sitzverstellvorrichtung 10 für einen nicht dargestellten Fahrzeugsitz weist ein Gehäuse 14 auf, das aus einem mittleren, blockartigen Gehäuse-Grundteil 12 und zwei von verschiedenen Seiten auf das Gehäuse-Grundteil 12 aufgesetzten GehäuseAbdeckungen 11 und 13 gebildet ist. Die Gehäuse-Abdeckung 11 besitzt einen angeformten Flansch 24 mit zumindest einer Bohrung 25, an der die Sitzverstellvorrichtung 10 an ihrem Einbauort fixiert werden kann.

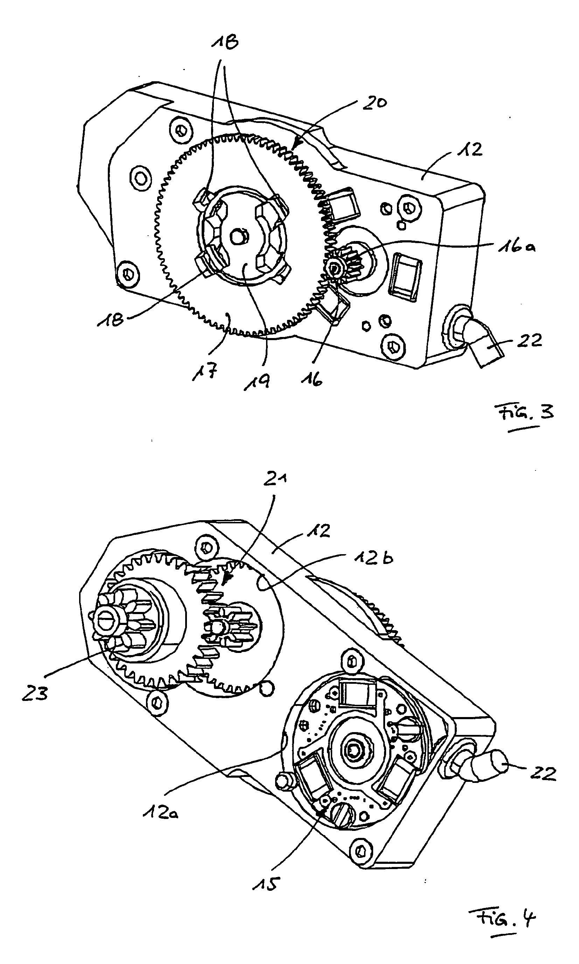

Wie insbesondere Figur 4 zeigt, besitzt das Gehäuse-Grundteil 12 auf seiner Vorderseite im seitlichen Endbereich eine Ausnehmung 12a, in die ein Antriebsmotor 15 in Form eines bürstenlosen Elektromotors integriert ist, der über ein endseitig vom Gehäuse-Grundteil 12 herausführendes Anschlusskabel 22 mit elektrischer Energie versorgt ist. Eine Abtriebswelle 16 des Antriebsmotors 15 steht auf der Rückseite des Gehäuse-Grundteils 12 hervor und trägt ein Ritzel 16a (siehe Figur 3).

Im mittleren Bereich des Gehäuse-Grundteils 12 ist auf dessen Rückseite ein selbsthemmender Freilauf 20 in Form eines mechanischen Klemmfreilaufs vorgesehen. Dieser umfasst ein Antriebsteil in Form eines Antriebszahnrades 17, das mit dem Ritzel 16a der Ausgangswelle 16 des Antriebsmotors 15 kämmt. Das Antriebszahnrad 17 ist ringförmig ausgebildet und umgibt ein Abtriebsteil 19, wobei zwischen dem Antriebszahnrad 17 und dem Abtriebsteil 19 eine selbsthemmende Klemmvorrichtung 18 angeordnet ist, deren Aufbau an sich bekannt ist. Wenn von dem Antriebsmotor 15 auf das Antriebszahnrad 17 eine Drehbewegung übertragen wird, wirkt die Klemmvorrichtung 18 als Mitnehmer, so dass die Drehbewegung unmittelbar auf das Abtriebsteil 19 übertragen wird. Wenn hingegen von einem Benutzer des Fahrzeugsitzes auf diesen eine Belastung ausgeübt wird, wirkt diese als Antriebskraft am Abtriebsteil 19. In diesem Fall arretiert die Klemmvorrichtung 18, wodurch das Abtriebsteil 19 undrehbar gehalten ist, so dass am Fahrzeugsitz keine ungewollten Verstellbewegungen auftreten.

Im Inneren des Gehäuse-Grundteils 12 steht das Abtriebsteil 19 des Freilaufs 20 in nicht dargestellter Weise mit einem nachgeschalteten Getriebe 21 in Form eines Stirnradgetriebes oder eines Umlaufrädergetriebes in Eingriff. Das Getriebe 21 sitzt in einer weiteren auf der Vorderseite des Gehäuse-Grundteils 12 ausgebildeten Ausnehmung 12b, die an dem dem Antriebsmotor 15 abgewandten Ende des Gehäuse-Grundteils 12 ausgebildet ist. Ein Abtriebsritzel 23 des Getriebes 21 kann mittelbar oder unmittelbar mit dem zu verstellenden Abschnitt des Fahrzeugsitzes verbunden sein. Durch die Verwendung des einzelnen, blockartigen Gehäuse-Grundteils 12 und die Anordnung des Antriebsmotors 15 und des Getriebes 21 auf der einen Seite des Gehäuse-Grundteils 12 in dessen jeweiligen Endbereichen und der Anordnung des selbsthemmenden Freilaufs 20 im mittleren Bereich der entgegengesetzten Seite des Gehäuse-Grundteils 12 ist ein sehr kompakter, platzsparender Aufbau gegeben.

Gegebenenfalls kann für den Antriebsmotor 15 eine elektronische Steuerung vorgesehen sein, die dann ebenfalls in das Gehäuse-Grundteil 12 integriert wird und vorzugsweise in einer auf der Vorderseite ausgebildeten Ausnehmung des Gehäuse-Grundteils 12 sitzt.

## Patentansprüche

1. Sitzverstellvorrichtung für einen Fahrzeugsitz, mit einem Antriebsmotor (15), der mit einem Antriebsteil (17) eines selbsthemmenden Freilaufs (20) in Eingriff steht, dessen Abtriebsteil (19) mit einem Getriebe (21) verbunden ist, wobei der Antriebsmotor (15), der Freilauf (20) und das Getriebe (21) in einem gemeinsamen Gehäuse (14) angeordnet sind, das zumindest eine Gehäuse-Abdeckung (11, 13) aufweist, **dadurch gekennzeichnet, dass** das Gehäuse (14) ein Gehäuse-Grundteil (12) aufweist und dass der Antriebsmotor (15), der Freilauf (20) und das Getriebe (21) an dem Gehäuse-Grundteil (12) gehalten sind, wobei der Antriebsmotor (15) und das Getriebe (21) auf einer Vorderseite des Gehäuse-Grundteils (12) und der Freilauf (20) auf der Rückseite des Gehäuse-Grundteils (12) angeordnet sind.

2. Sitzverstellvorrichtung nach Anspruch 1 , **dadurch gekennzeichnet, dass** der Antriebsmotor (15) ein bürstenloser Elektromotor ist.

3. Sitzverstellvorrichtung nach Anspruch 1 oder 2, **dadurch gekennzeichnet, dass** der Freilauf (20) ein mechanischer Klemmfreilauf ist.

4. Sitzverstellvorrichtung nach einem der Ansprüche 1 bis 3, **dadurch gekennzeichnet, dass** das Getriebe (21) ein Stirnradgetriebe ist.

5. Sitzverstellvorrichtung nach einem der Ansprüche 1 bis 3, **dadurch gekennzeichnet, dass** das Getriebe (21) ein Umlaufrädergetriebe ist.

6. Sitzverstellvorrichtung nach einem der Ansprüche 1 bis 5, **dadurch gekennzeichnet, dass** eine elektronische Steuerung für den Antriebsmotor (15) vorgesehen ist, die in das Gehäuse (14) integriert ist.

## Claims

1. A seat adjusting device for a vehicle seat, with a drive motor (15) which engages with a driving part (17) of a self-inhibiting freewheel (20) whose driven part (19) is connected to a gear (21), wherein the drive motor (15), the freewheel (20) and the gear (21) are arranged in a common housing (14) which has at least one housing cover (11, 13), **characterised in that** the housing (14) has a housing base section (12), and **in that** the drive motor (15), the freewheel (20) and the gear (21) are retained on the housing base section (12), wherein the drive motor (15) and the gear (21) are arranged on a front side of the housing base section (12) and the freewheel (20) is arranged on the rear side of the housing base section (12).

2. The seat adjusting device according to Claim 1, **characterised in that** the drive motor (15) is a brushless electric motor.

3. The seat adjusting device according to Claim 1 or 2, **characterised in that** the freewheel (20) is a mechanical clamping freewheel.

4. The seat adjusting device according to any one of Claims 1 to 3, **characterised in that** the gear (21) is a spur gear.

5. The seat adjusting device according to any one of Claims 1 to 3, **characterised in that** the gear (21) is a planetary gear.

6. The seat adjusting device according to any one of Claims 1 to 5, **characterised in that** an electronic control system is provided for the drive motor (15), which system is integrated in the housing (14).

## Revendications

1. Dispositif de réglage de siège pour un siège de véhicule, avec un moteur d'entraînement (15) engrené avec une partie d'entraînement (17) d'une roue libre (20) autobloquante dont la partie d'entraînement de sortie (19) est reliée à un engrenage (21), le moteur d'entraînement (15), la roue libre (20) et l'engrenage (21) étant disposés dans un boîtier commun (14) comportant au moins un cache de boîtier (11, 13), **caractérisé en ce que** le boîtier (14) comporte une partie de fond de boîtier (12) et que le moteur d'entraînement (15), la roue libre (20) et l'engrenage (21) sont maintenus contre la partie de fond de boîtier (12), le moteur d'entraînement (15) et l'engrenage (21) étant disposés sur un côté avant de la partie de fond de boîtier (12) et la roue libre (20) étant disposée sur le côté arrière de la partie de fond de boîtier (12).

2. Dispositif de réglage de siège selon la revendication 1, **caractérisé en ce que** le moteur d'entraînement (15) est un moteur électrique sans balais.

3. Dispositif de réglage de siège selon la revendication 1 ou 2, **caractérisé en ce que** la roue libre (20) est une roue libre bloquante mécanique.

4. Dispositif de réglage de siège selon l'une quelconque des revendications 1 à 3, **caractérisé en ce que** l'engrenage (21) est un engrenage à roue cylindrique.

5. Dispositif de réglage de siège selon l'une quelconque des revendications 1 à 3, **caractérisé en ce que** l'engrenage (21) est un engrenage à roues planétaires.

6. Dispositif de réglage de siège selon l'une quelconque des revendications 1 à 5, **caractérisé en ce qu'**une commande électronique est prévue pour le moteur d'entraînement (15) intégré dans le boîtier (14).
